# EUROPEAN PATENT APPLICATION

(11) **EP 2 048 864 A1**
(43) Date of publication of application: **15.04.2009**
(21) Application number: 07253988.5
(22) Date of filing: 09.10.2007
(51) Int. Cl.: H04M 3/493

(54) **Multimedia interactive response system**

(71) Applicant: British Telecommunications Public Limited Company, London EC1A 7AJ (GB)
(72) Inventor: The designation of the inventor has not yet been filed
(74) Representative: Wilson, Peter David

(57) **Abstract**

An interactive system in which the system can detect the capabilities of the terminal communicating with the system. If a terminal can initiate a SIP-based VoIP call then an HTTP (HTTPS) session can be initiated and synchronised audio and visual content can be sent to the terminal. If the terminal is only capable of a conventional voice call then the session can be switched to a conventional interactive voice response system.

## Description

The present invention relates to interactive voice response systems, and in particular interactive voice systems that can also respond to a user with multimedia, for example text, graphics, etc. It is well known for interactive voice response (IVR) systems to be used to handle calls made to businesses or other organisations. Typically IVR systems are used to direct callers to an appropriate department or service or to allow users to access data relating to access information relating to, for example, the user's bank account. A caller can select options from menus, or enter account details, by pressing telephone key pad buttons to generate tones or through the use of voice recognition technology in the IVR. The use of IVRs can lead to customer dissatisfaction if there are a large number of menus to progress through before a connection is made to an operator, or the desired information is provided.

According to a first aspect of the present invention there is provided a method for providing an interactive response to a client terminal, the method comprising the steps of:
a) initiating a communication session with a client terminal; b) detecting one or more characteristics of the client terminal; and c) routing the communication session to an interactive response means in accordance with the characteristics detected in step b).

If it is detected that the client terminal can support audio and video content then the communication session may be routed to an interactive response means that can supply audio and/or video content. For example, in step b) it may be detected that the client terminal communication session comprises SIP (Session Initiation Protocol) data. The SIP data may define the audio and/or data capabilities of the client terminal or parameters for a further communication session that can be used to transmit audio and/or video content to the client terminal.

Alternatively, if in step b) it is detected that the client terminal can only support telephony then the communication session is routed to an interactive voice response means.

According to a second aspect of the present invention, there is provided a computer program product, comprising computer executable code for performing a method as described above.

According to a third aspect of the present invention there is provided an apparatus for providing an interactive response to a client terminal, the apparatus being configured in use, to initiate a communication session with a client terminal; detect one or more characteristics of the client terminal; and rout the communication session to an interactive response means in accordance with the detected client terminal characteristics.

The invention will be described with reference to the following Figures, which are provided by way of explanation only, in which:
Figure 1 shows a schematic depiction of an IVR system 10 according to the present invention;
Figure 2 shows a flow chart which details the operation of an IVR system according to the present invention; and
Figure 3 shows a schematic depiction of the information flow between a client terminal and an IVR system according to the present invention.

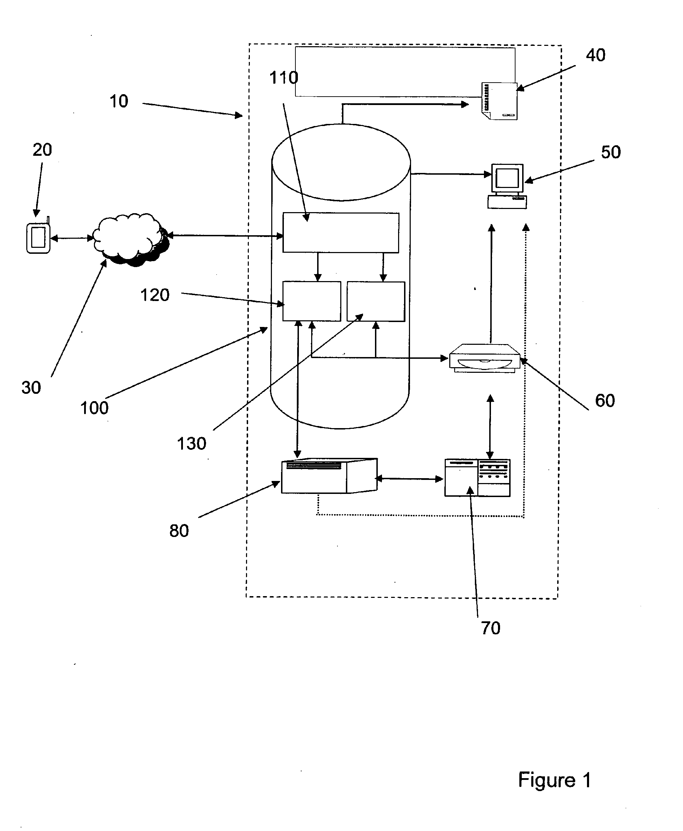

Figure 1 shows a schematic depiction of an IVR system 10 according to the present invention. The IVR system 10 is connected to a client terminal 20 via a communications network 30: the nature and functionality of the client terminal will determine the type of communications network. If the client terminal is a conventional telephone then a connection will be made to the IVR system 10 via the PSTN (public switched telephone network). Alternatively, if the client terminal is capable of making VoIP (Voice over Internet Protocol) calls then a connection will be made to the IVR system via an IP-based network such as the internet.

The IVR system 10 comprises a call router 100, content server 80, call data storage means 70, IVR server 60, one or more agent terminals 50, and a client profile database 40. The call router 100 comprises call filter 110, SIP unit 120 and PSTN unit 130. In use, a user will make a call to the IVR system by dialling an appropriate number. The calls are routed to the call filter 110 which can distinguish between different types of calls. PSTN calls are routed to the PSTN unit 130 but VoIP calls are analysed prior to any subsequent routing (see below for further details).

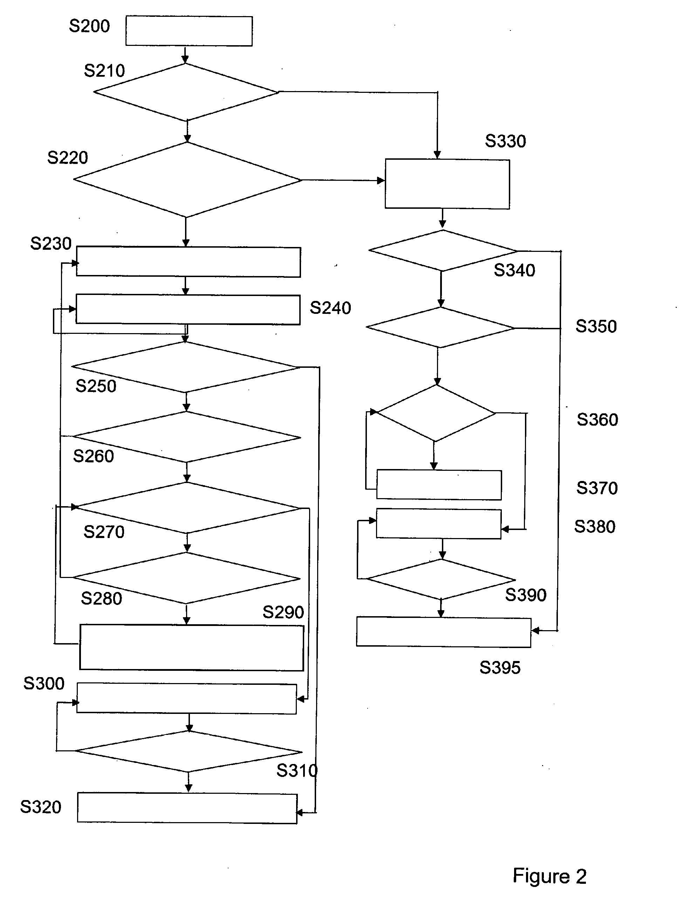

The operation of the IVR system will now be described further with reference to Figure 2.
Figure 2 shows a flow chart which details the operation of an IVR system according to the present invention. At Step S200 an incoming call is received by the call router 100. The call filter 110 determines at step S210 whether the call is a SIP-based (Session Initiation Protocol) call: if it is then the call is a SIP-based call then the call filter 110 passes the call to the SIP unit 120.

At step S220 the SIP unit 120 analyses the INVITE message field to determine the capabilities of the terminal that is making the call. For example, the terminal may send a SIP INVITE message which comprises metadata that identifies the capabilities of the terminal and the bandwidth requirements of a call. Conventionally, this is defined in the SIP INVITE messages' **"Content-Type: application/sdp"** field. If http/https and audio parameters are defined in the SDP (Session Description Protocol), the SIP unit is responsible for exchanging signalling messages with the client terminal in setting up secured RTP and TCP channels respectively (see below) before forwarding the process the content server 80. If only audio parameters are defined in the SDP field, the SIP unit negotiates the set up of a RTP channel and forwards the call the IVR server 60. An example of the content communication represented in SDP format is as follows:
m=audio 33728 RTP/AVP 0 97.
a=rtpmap:0 PCMU/8000.
a=rtpmap:97 iLBC/8000.
m=application 80 TCP HTTP.
a=setup:passive.
a=connection:new.

By using **a=setup:passive** and **a=connection:new** in the SDP field, the invention instructs the SIP unit to establish automatically a new HTTP connection to the client terminal. The a=rtpmap:0 PCMU/8000 and a=rtpmap:97 iLBC/8000 SDP attributes field specify information on the clock rate and encoding parameters of the audio channel. The m=application 80 TCP HTTP attribute instructs the SIP unit to use TCP as the transport protocol and to use port 80 for the HTTP connection. If the application invoked by the call centre systems requires a more secure connection between the client terminal and the call centre then it will be understood that an HTTPS connection may be set up as an alternative to HTTP. Further data or information may be included in the SDP filed to define the size and/or resolution of the client terminal screen.

If the client terminal contains the necessary connection and audio parameters then the process proceeds to step S230. The SIP unit is in communication with the content server 80 which provides audio and other content to the SIP unit to be passed to the client terminal via the connection(s) set up between the SIP unit and the client terminal. The attributes specified in the SDP field will determine the initial content that is pushed to the client terminal. The content server is also responsible for maintaining the synchronization of the audio channel with the other content that is sent to the client terminal. For example, if the user selects a 'main page' option then the audio channel will synchronize with the visual content that is comprises within the main page.

The content server 80 comprises a JAVA/XML application which receives responses from the client terminal and then sends further appropriate content to the client terminal. Rather than receiving prerecorded audio-only messages as in a conventional IVR call centre system, the client terminal receives a menu or list of options that may be selected, either through the audio channel (using speech recognition or dial tone detection) or by clicking/touching on the application interface displayed in a manner similar to that of browsing a website. An audio channel may be provided to explain the displayed data or to provide further information. The SIP unit is in communication with the IVR server and data retrieved from the IVR server may be combined with data from the content server in order to construct the data that is sent to the client terminal. While waiting for the page/panel to display subsequent content, advertisement information may be pushed to the same page of the application interface without having to open up multiple application instances or a web page tab to display advertisement information.

At step 240 the SIP unit receives data from the client data in response to the data sent from the content server (and the IVR server). The SIP unit will then return data in response to the data received from the client terminal, updating the display (and associated audio) that is sent to the client terminal. Step 240 will be repeated until the user has no further options to select from and the process progresses to step S250. If the task is completed (for example, if a bank balance or similar information has been displayed to a user) then the process terminates at step S320. Otherwise, the SIP unit transfers invokes an agent at step S260: if an agent is available (Step S270) then the VoIP session is transferred to an available agent at step S300. If the agent can complete the task at step S310 then the process is terminated at step S320: otherwise the user is transferred to another agent and the process returns to step 300. This loop is then iterated until an agent is able to complete the task and the process is terminated.

If no agent is available at Step S270 then the user is placed in a queue at S280 and given the option to return to the interactive system. If the user does not which to return to the interactive system then the process returns to step S270 to determine whether any agents have become available. If the user does select the option to return to the interactive system then at step S290 the various options are updated in the light of the user's previous choices and/or the agent queue that the user was waiting in before returning to Step 230.

At Step S200 the call router 100 receives incoming calls. If the call filter 110 determines that a call is a PSTN call, or a VoIP call that lacks SIP data then the call is passed to the IVR server at Step S330, via either the PSTN unit 130 or the SIP unit 120 as appropriate. The IVR is conventional, offering a pre-recorded message to a user: the user is able to select one of a number of options either by pressing an appropriate button (and the recognition of the associated dial tone) or through the recognition of a spoken response. If the call can be processed and the task completed (step S340) using the conventional IVR then the task is ended at step 395. Otherwise the user will be offered the opportunity to speak to an agent at step S350. If this is not required then the process ends at Step 395 but otherwise, the process continues to step S360 and the user is passed to a queue for an agent. If an agent is available then the call is transferred to an agent at Step 380 and the agent attempts to complete the task at step 390. If the agent can complete the task at step S390 then the process is terminated at step S395: otherwise the user is transferred to another agent and the process returns to step 390. This loop is then iterated until an agent is able to complete the task and the process is terminated. If no agents are available then the user is held in a queue for a period of time at step S370 until returning to step S360 to determine if an agent is available.

The IVR system further comprises call data storage means 70, which stores call specific information such as user's profiles, and user's interaction history with the IVR system, IVR server and the content server. The call data storage mean also comprises data such that if at any time a human agent has to take a call from system, the human agent can be made aware of where the caller is the system such that the agent can take over the voice response from the machine whilst still maintaining the application transaction. The agent terminals are conventional IVR agent terminals, th software of which is update to be able to deal with the additional IVR components disclosed in the present invention.

In order to take advantage of the interactive service provided by the present invention he client terminal must be a mobile terminal or computing device with an internet connection (for example via WiFi, WiMAX, a 2.5G/3G cellular connection etc.) which can make a SIP-based call. For example (but without limitation), a client terminal may be a UMPC (Ultra-Mobile PC) device which is a compact and powerful computing device that is suitable for mobile application. To enable the configuration of automated content information in the SIP Invite message, a piece of software that presets the SDP application field values according to network access type can be bundled in the client terminal. Alternatively, it may be pushed to users (i.e. as the payload of a MMS) or be made available for download by users. Hence, the complexity of defining the SDP is hidden from novice users.

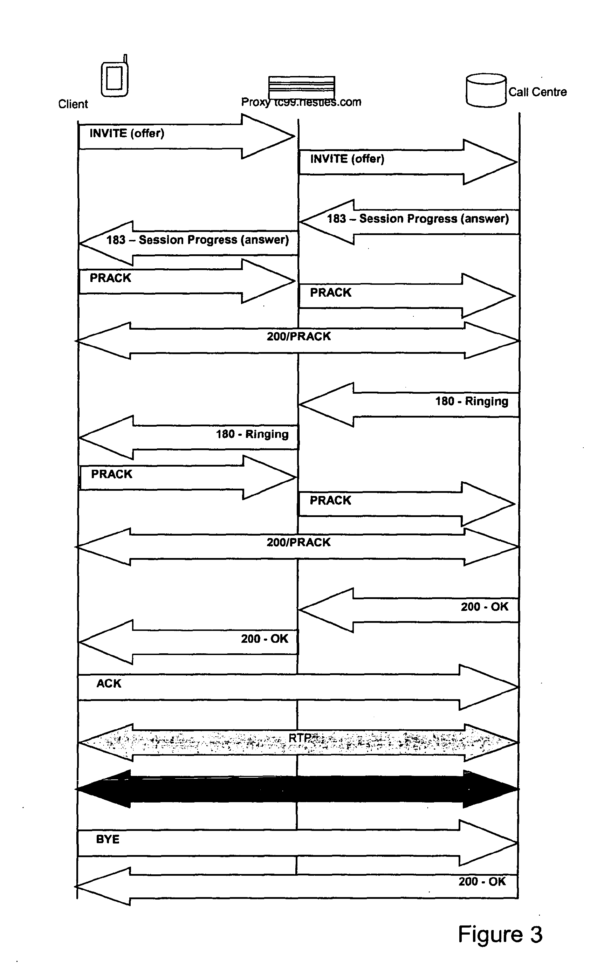

Figure 3 shows a schematic depiction of the information flow between a client terminal and an IVR system according to the present invention, with all of the messages being routed via an intermediate proxy server. Figure 3 shows that the initial INVITE message is sent from the client terminal to the IVR system, which when answered and acknowledged leads to the IVR system sending a ringing signal to the client terminal. Once the ringing signal is fully acknowledged then RTP and TCP sessions are established directly between the client terminal and the IVR system, bypassing the proxy server.

## Claims

1. A method for providing an interactive response to a client terminal, the method comprising the steps of:
a) initiating a communication session with a client terminal;
b) detecting one or more characteristics of the client terminal; and
c) routing the communication session to an interactive response means in accordance with the characteristics detected in step b).

2. A method according to Claim 1, wherein if in step b) it is detected that the client terminal can support audio and video content then the communication session is routed to an interactive response means that can supply audio and/or video content.

3. A method according to Claim 2, wherein in step b) it is detected that the client terminal communication session comprises SIP (Session Initiation Protocol) data.

4. A method according to Claim 3, wherein the SIP data defines the audio and/or data capabilities of the client terminal.

5. A method according to Claim 3, wherein the SIP data defines parameters for a further communication session that can be used to transmit audio and/or video content to the client terminal.

6. A method according to any of Claims 2 to 5, wherein the interactive response means transmits additional data to the client terminal.

7. A method according to any of Claims 1 to 6, wherein in step a), a communication session is established using the hyper text transfer protocol (HTTP).

8. A method according to any of Claims 1 to 6, wherein in step a), a communication session is established using the secure hyper text transfer protocol (HTTPS).

9. A method according to Claim 1, wherein if in step b) it is detected that the client terminal can only support telephony then the communication session is routed to an interactive voice response means.

10. A computer program product, comprising computer executable code for performing a method according to any of Claims 1 to 9.

11. An apparatus for providing an interactive response to a client terminal, the apparatus being configured in use, to initiate a communication session with a client terminal; detect one or more characteristics of the client terminal; and rout the communication session to an interactive response means in accordance with the detected client terminal characteristics.
